Europäisches Patentamt

European Patent Office

Office européen des brevets

(11) Veröffentlichungsnummer : **0 115 853
B1**

(12) **EUROPÄISCHE PATENTSCHRIFT**

(45) Veröffentlichungstag der Patentschrift :
25.03.87

(51) Int. Cl.⁴ : **A 01 D 34/73**

(21) Anmeldenummer : 84101006.9

(22) Anmeldetag : 01.02.84

(54) **Mähteller für Tellermäher.**

(30) Priorität : 04.02.83 DE 3303736

(43) Veröffentlichungstag der Anmeldung :
15.08.84 Patentblatt 84/33

(45) Bekanntmachung des Hinweises auf die Patenterteilung : 25.03.87 Patentblatt 87/13

(84) Benannte Vertragsstaaten :
DE FR NL

(56) Entgegenhaltungen :
DD-A-   96 623
DE-A- 2 519 378
DE-A- 2 612 381
DE-A- 2 701 941
DE-A- 2 830 509
US-A- 3 662 529

(73) Patentinhaber : **Friedrich Mörtl Schleppergerätebau
GmbH & Co. KG
Kesslerstrasse 2
D-8780 Gemünden (DE)**

(72) Erfinder : **Grenzebach, Hans
Spessartweg 29
D-8780 Gemünden 29 (DE)**
Erfinder : **Grenzebach, Roland
Am Neuberg 11
D-8780 Gemünden/M (DE)**
Erfinder : **Mörtl, Friedrich, Dipl.-Ing.
Am Neuberg 12
D-8780 Gemünden/M (DE)**

(74) Vertreter : **Patentanwälte Dipl.-Ing. Rudolf Bibrach
Dipl.-Ing. Elmar Rehberg
Postfach 1453 Pütterweg 6
D-3400 Göttingen (DE)**

**Beschreibung**

Die Erfindung bezieht sich auf einen Mähteller für Tellermäher mit den im Oberbegriff des Anspruchs 1 aufgeführten Merkmalen. Derartige Tellermäher weisen — im Gegensatz zu Trommelmähern — einen vergleichsweise kleineren Durchmesser auf, so daß die Unterbringung von federnden Messerhaltern bei Tellermähern vergleichsweise schwieriger ist.

Die DE-A-2 519 378 zeigt einen derartigen Mähteller für Tellermäher. Der Messerhalter ist als Hebel ausgebildet. Der Hebel ist über ein gesondertes Gelenk schwenkbar gelagert, so daß er auf diese Art und Weise die erforderliche Beweglichkeit erhält. Eine Deckplatte, die zusätzlich an der Antriebswelle zu befestigen ist, sichert die Hebel in ihrer Gebrauchsstellung. Eine solche schwenkbare Lagerung der Hebel läßt sich bei den beengten Platzverhältnissen eines Tellermähers realisieren, wenngleich der konstruktive Aufwand nicht unbeträchtlich ist und bei einem Wechsel der Messerklingen auch die Befestigungsschrauben für den Mähteller gelöst werden müssen.

Die US-A-3 662 529 zeigt einen Mähteller für Trommelmäher. An dem Mähteller sind federnde Messerhalter angebracht, insbesondere angeschweißt, die an ihren freien Enden Messerhaltezapfen tragen. Der Messerhaltezapfen ist mit einer Kegelfläche in einer entsprechenden Gegenfläche am Mähteller abgestützt. Damit wird bereits der Mähteller zur Übertragung von Kräften über die Messer herangezogen. Die für das Auffedern der Messerhalter erforderliche radiale Länge der Messerhalter kann hier ohne Weiteres bei solchen Trommelmähern untergebracht werden, weil der Durchmesser, auf dem sich die Messerhaltezapfen befinden, bei Trommelmähern etwa doppelt so groß ist wie bei Tellermähern.

Auch die DE-A-2 701 941 und die DE-A-96 623 zeigen Trommelmäher mit federnden Messerhaltern, die selbst mit einer gesonderten Befestigung, also unter Verwendung zusätzlicher Schrauben, an dem Mähteller gehalten sind.

Der Erfindung liegt die Aufgabe zugrunde, einen Mähteller für Tellermäher der eingangs beschriebenen Art mit einer einfachen Befestigung der Messerhalter aufzuzeigen, bei deren Anwendung sich eine zur Realisierung des erforderlichen Federweges ausreichende radiale Länge ergibt. Die Befestigung der Messerklingen soll gleichermaßen für links- und rechtslaufende Mähteller einsetzbar sein.

Erfindungsgemäß wird dies dadurch erreicht, daß das Blechformteil federnd ausgebildet ist und mit seinem inneren Ende zwischen dem Mähteller und der Antriebswelle eingeklemmt und von den Befestigungsschrauben des Mähtellers gehalten ist, und daß der Messerhaltezapfen eine Kegelfläche aufweist, mit der er an einer Gegenfläche am Mähteller abgestützt ist. Damit wird in geschickter Weise die ohnehin vorhandene Befestigung des Mähtellers für die Anordnung des federnden Blechformteils ausgenutzt. Es entfällt eine zusätzliche Sicherung und/oder Befestigung der Messerhalter. Gleichzeitig wird das innere Ende der Messerhalter möglichst nahe an die zentrale Achse des Mähtellers herangerückt, so daß das Blechformteil eine möglichst große radiale Erstreckung bekommt. Auf diese Art und Weise reicht selbst bei Tellermähern die radiale Länge aus, um den erforderlichen Federweg zu realisieren, der für das Auswechseln der Messer erforderlich ist. Durch das Einklemmen des inneren Endes des Blechformteils zwischen Mähteller und Antriebswelle wird auch ein einwandfreier Sitz des Blechformteils, verbunden mit einem schlagfreien Abstützen des Messerhaltezapfens in dem Mähteller erreicht. Ein weiterer Vorteil der erfindungsgemäßen Messerhalterung besteht darin, daß die Oberseite des Mähtellers keinerlei Hindernisse oder Ansatzstellen für Futter aufweist, so daß dieses beim Mähen ungehindert über den sich drehenden Mähteller nach hinten abfließen kann.

Das federnde Blechformteil des Messerhalters weist natürlich eine solche federnde Nachgiebigkeit auf, daß durch Niederdrücken ein Wechsel der Messerklinge ohne Lösen der Befestigungsschraube möglich ist. Auch die sonstige Formgebung und Dimensionierung des Blechformteils ist hierauf abgestimmt. Zum Wechseln der Messerklinge wird eine Hilfseinrichtung eingesetzt, die zwischen das Blechformteil und den Mähteller faßt und mit deren Hilfe sich das Blechformteil federnd nach unten niederdrücken läßt.

Das federnde Blechformteil kann lose zwischen Mähteller und einem Flansch der Antriebswelle eingelegt sein. Hierunter wird verstanden, daß die Bohrungen im Blechformteil etwas Luft oder Spiel zu den Befestigungsschrauben aufweisen, so daß die Abstützung der Messerhaltezapfen an dem Mähteller die genaue radiale Lage der Messerhalter bestimmt.

Das innere Ende des Blechformteils des Messerhalters kann ein Lochbild aufweisen, das zumindest zum Teil dem Lochbild des Mähtellers zu seiner Befestigung an dem Flansch der Antriebsachse entspricht. Durch dieses Lochbild ist das Blechformteil zugleich in radialer Richtung gesichert.

Der Messerhaltezapfen kann sich direkt an dem Mähteller bzw. in einer dort angeordneten Bohrung abstützen. Es ist aber auch möglich, daß der Mähteller unter der Bohrung einen Verstärkungsring aufweist, der dort befestigt ist und in dem dann der Messerhaltezapfen abgestützt ist. In beiden Fällen ist es sinnvoll, das federnde Blechformteil nicht nur im Mittelbereich des Mähtellers, sondern auch im Randbereich am Mähteller abzustützen. Eine besonders einfache und wirkungsvolle Abstützung wird dann erreicht, wenn die zu der Kegelfläche korrespondierende Gegenfläche an dem Verstärkungsring vorgesehen ist. Auch dabei zentrieren sich die Teile beim Auffedern entsprechend selbst und stützen sich aneinander ab.

Eine bevorzugte Ausführungsform der Erfindung ist in den Zeichnungen dargestellt. Es zeigen:

Figur 1 die wesentlichen Teile eines Mähtellers mit Messerhalterung, teilweise in geschnittener Darstellung und

Figur 2 eine Draufsicht auf einen Mähteller.

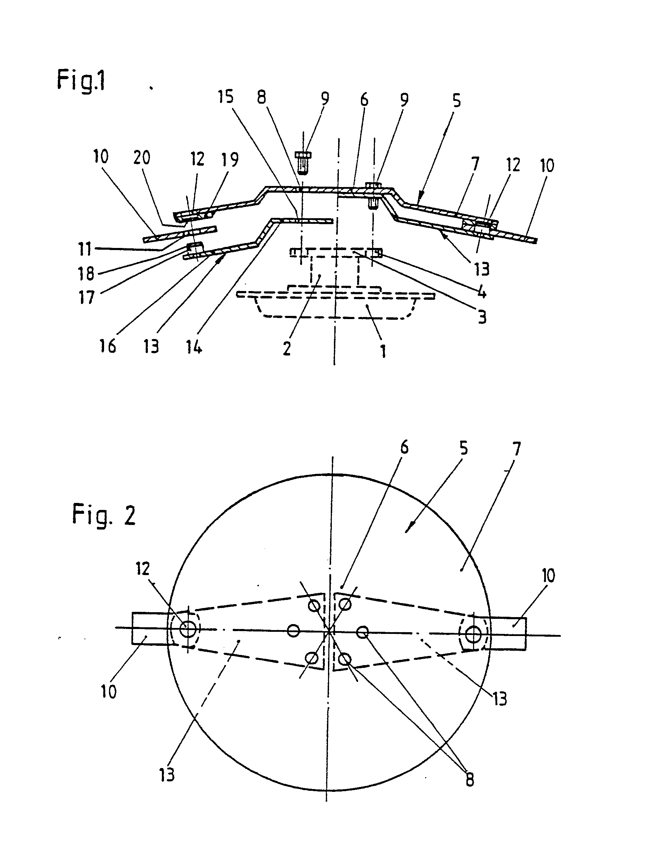

In Figur 1 ist in gestrichelter Linienführung ein Mähbalken (1) mit einer nach oben herausgeführten Antriebswelle (2), die in einem Flansch (3) endet, vorgesehen. Der Flansch (3) besitzt mehrere Durchtrittslöcher (4), die insgesamt ein Lochbild ergeben und zur Befestigung eines Mähtellers (5) dienen.

Der Mähteller (5) mit der aus der Zeichnung ersichtlichen Formgebung besitzt einen Innenbereich (6) und einen Randbereich (7). Im Innenbereich (6) weist der Mähteller Durchgangslöcher (8) auf, deren Anordnung der Durchtrittslöcher (4) im Flansch (3) der Antriebswelle (2) entsprechen, so daß damit eine Befestigung des Mähtellers (5) an dem Flansch (3) vermittels mehrerer Befestigungsschrauben (9) möglich ist.

Im Randbereich (7) ist mindestens eine, vorzugsweise zwei, Messerklingen (10) angeordnet. Jede Messerklinge (10) besitzt eine Ausnehmung (11), der jeweils eine Bohrung (12) im Mähteller (5) zugeordnet ist. Der Messerhalter zur Anordnung einer Messerklinge (10) weist als wesentlichen Bestandteil ein federndes Blechformteil (13) auf, welches sich im wesentlichen radial erstreckt und die aus der Zeichnung ersichtliche Formgebung besitzt. Das innere Ende (14) des Blechformteils ist mit Bohrungen (15) versehen, die zumindest teilweise dem Lochbild im Flansch (3) bzw. den Durchgangslöchern (8) entsprechen. Das Blechformteil (13) ist unterhalb des Mähtellers (5) vorgesehen und mit seinem inneren Ende (14) zwischen den Innenbereich (6) und den Flansch (3) der Antriebswelle (2) eingeklemmt und fixiert. Zur festen Anordnung dienen die Befestigungsschrauben (9), mit denen auch der Mähteller (5) befestigt ist. An ihren äußeren Enden (16) tragen die Blechformteile (13) jeweils einen Messerhaltezapfen (17), der in eine Durchbrechung eingesetzt und beispielsweise festgeschweißt ist. Der Messerhaltezapfen (17) ist an seinem oberen, dem Mähteller (5) zugekehrten Ende mit einer Kegelfläche (18) versehen. Er greift durch eine Ausnehmung der Messerklinge (10) bis in die Bohrung (12) hinein. Die Bohrung (12) besitzt entsprechend der Kegelfläche (18) eine angeschrägte Gegenfläche (20), so daß unter Zentrierwirkung hier eine Abstützung des Blechformteils (13) an dem Mähteller (5) stattfindet. Die Messerklinge (10) ist damit drehbar bzw. schwenkbar gesichert und gelagert. Zum Wechsel der Messerklinge (10) ist es nicht erforderlich, die Befestigungsschrauben (9) zu lösen. Es genügt vielmehr ein Hilfswerkzeug, welches in den Zwischenraum zwischen Formteil (13) und Mähteller (5) eingreift und mit dessen Hilfe das federnde Blechformteil (13) nach unten niedergedrückt werden kann, so daß die Messerklinge (10) von dem Messerhaltezapfen (17) freikommt. Nach dem Einhängen der neuen Messerklinge (10) federt das Blechformteil (13) nach dem Loslassen in seine Ausgangslage zurück, so daß sich die Kegelfläche (18) wieder an der Gegenfläche (20) der Bohrung (12) abstützt. Anstelle der Bohrung (12) bzw. zusätzlich kann auch ein Verstärkungsring (19) unter den Randbereich (7) des Mähtellers (5) geschweißt sein, der seinerseits mit der Gegenfläche (20) zu der Kegelfläche (18) versehen ist. Auf diese Weise wird eine Verstärkungswirkung erreicht und ein größerer Abstand zwischen dem Blechformteil (13) und dem Mähteller (5).

Aus Figur 2 ist ersichtlich, daß sich die Messerklingen (10) bei Fliehkrafteinwirkung radial nach außen stellen, so daß der Mähteller (5) mit den Messerklingen (10) die Schnittarbeit durchführen kann. Beim Auftreten von Hindernissen können die Messerklingen (10) unter den Randbereich (7) des Mähtellers (5) zurückschwenken, so daß sie selbst vergleichsweise geschützt untergebracht sind.

**Patentansprüche**

1. Mähteller für Tellermäher mit einer in seinem Mittelbereich (6) angeordneten, Befestigungsschrauben (9) aufweisenden Einrichtung zum Befestigen an einer Antriebswelle (2) und mit mindestens einem Messerhalter zur Aufnahme einer Messerklinge (10) im Randbereich (7) des Mähtellers (5), wobei der Messerhalter ein sich im wesentlichen radial zu dem Mähteller (5) angeordnetes Blechformteil (13) aufweist, das an seinem äußeren Ende einen den Mähteller zugekehrten Messerhaltezapfen (17) trägt, der durch eine Ausnehmung (11) in der Messerklinge (10) hindurch in eine Bohrung (12) am Mähteller (5) eingreift, dadurch gekennzeichnet, daß das Blechformteil (13) federnd ausgebildet ist und mit seinem inneren Ende (14) zwischen dem Mähteller (5) und der Antriebswelle (2) eingeklemmt und von den Befestigungsschrauben (9) des Mähtellers (5) gehalten ist, und daß der Messerhaltezapfen (17) eine Kegelfläche (18) aufweist, mit der er an einer Gegenfläche (20) am Mähteller (5) abgestützt ist.

2. Mähteller nach Anspruch 1, dadurch gekennzeichnet, daß das federnde Blechformteil (13) lose zwischen dem Mähteller (5) und einem Flansch (3) der Antriebswelle (2) eingelegt ist.

3. Mähteller nach Anspruch 1 und 2, dadurch gekennzeichnet, daß das innere Ende (14) des Blechformteils (13) des Messerhalters ein Lochbild aufweist, das mindestens zum Teil dem Lochbild des Mähtellers (5) zu seiner Befestigung an dem Flansch (3) der Antriebswelle (2) entspricht.

4. Mähteller nach Anspruch 1, dadurch gekennzeichnet, daß der Mähteller (5) unter der Bohrung (12) einen Verstärkungsring (19) aufweist, in dem der Messerhaltezapfen (17) abgestützt ist.

5. Mähteller nach Anspruch 1 und 4, dadurch gekennzeichnet, daß die zu der Kegelfläche (18) korrespondierende Gegenfläche (20) an dem Verstärkungsring (19) vorgesehen ist.

## Claims

1. Cutter disc for disc mowers, this cutter disc possessing a device for fastening to a drive shaft (2), this device being located in the central region (6) of the cutter disc, and exhibiting fastening screws (9), this cutter disc (5) further possessing at least one cutter-retaining arrangement for mounting a cutter blade (10) in its rim region (7), this cutter-retaining arrangement exhibiting a shaped sheet-metal component (13) which is located essentially radially in relation to the cutter disc (5), and which carries a cutter-retaining peg (17) at its outer end, this peg (17) pointing towards the cutter disc, passing through a hole (11) in the cutter blade (10), and engaging into a bore (12) in the cutter disc (5), characterized in that the shaped sheet-metal component (13) is designed in a manner such that it can yield resiliently, while its inner end (14) is clamped between the cutter disc (5) and the drive shaft (2), and is held by the fastening screws (9) associated with the cutter disc (5), and in that the cutter-retaining peg (17) exhibits a conical surface (18) *via* which it is supported against a mating surface (20) on the cutter disc (5).

2. Cutter disc according to Claim 1, characterized in that the shaped sheet-metal component (13), which can yield resiliently, is inserted between the cutter disc (5) and a flange (3) belonging to the drive shaft (2), insertion being accomplished in a manner such that the shaped sheet-metal component (13) is left with some mobility.

3. Cutter disc according to Claims 1 and 2, characterized in that the inner end (14) of the shaped sheet-metal component (13) associated with the cutter-retaining arrangement exhibits a hole pattern which corresponds to at least a portion of the pattern formed by the holes with which the cutter disc (5) is provided in order to enable it to be fastened to the flange (3) belonging to the drive shaft (2).

4. Cutter disc according to Claim 1, characterized in that below the bore (12), the cutter disc (5) exhibits a reinforcing ring (19), inside which the cutter-retaining peg (17) is supported.

5. Cutter disc according to Claims 1 and 4, characterized in that the mating surface (20) is provided on the reinforcing ring (19), this mating surface (20) corresponding to the conical surface (18).

## Revendications

1. Disque pour faucheuse à disques rotatifs, avec un dispositif prévu dans sa zone médiane (6) et ayant des vis de fixation (9), pour la fixation à un arbre d'entraînement (2) ; avec au moins un porte-lame recevant une lame de couteau (10) dans la zone du pourtour (7) du disque de coupe (5), le porte-lame comportant une pièce de forme (13) en tôle, qui est essentiellement radiale par rapport au disque de coupe (5) et qui porte, à son extrémité extérieure, un bouton (17) de maintien de lame tourné vers le disque de coupe, ce bouton pénétrant, à travers un évidement (11) de la lame de couteau (10), dans un trou (12) du disque (5), caractérisé en ce que la pièce de forme (13) en tôle est élastique, qu'elle est serrée, et son extrémité intérieure (14), entre le disque de coupe (5) et l'arbre d'entraînement (2), et maintenue par les vis de fixation du disque (9) et que le bouton (17) de maintien de lame présente une surface conique (18), avec laquelle il s'appuie sur une surface antagoniste (20) du disque de coupe (5).

2. Disque de coupe suivant la revendication 1, caractérisé en ce que la pièce de forme élastique (13) en tôle est insérée librement entre le disque de coupe (5) et un flasque (3) de l'arbre d'entraînement (2).

3. Disque de coupe suivant les revendications 1 et 2, caractérisé en ce que l'extrémité intérieure (14) de la pièce de forme (13) en tôle du porte-lame présente un ensemble de trous, qui correspond au moins en partie à l'ensemble de trous du disque de coupe (5) pour sa fixation au flasque (3) de l'arbre d'entraînement (2).

4. Disque de coupe suivant la revendication 1, caractérisé en ce que le disque de coupe (5) présente, sous le trou (12), une bague de renfort (19), dans laquelle s'appuie le bouton (17) de maintien de lame.

5. Disque de coupe suivant les revendications 1 et 4, caractérisé en ce que la surface antagoniste (20) qui correspond à la surface conique (18) est prévue sur la bague de renfort (19).

Fig.1

Fig. 2